# EUROPEAN PATENT SPECIFICATION

(11) **EP 0 940 220 B1**
(45) Date of publication and mention of the grant of the patent: **05.02.2003**
(21) Application number: 99102802.8
(22) Date of filing: 25.02.1999
(51) Int. Cl.: B24B 7/17, B24B 41/02, B23Q 1/26, B23Q 1/70

(54) **Double side grinding apparatus and double side polishing apparatus**
Doppelseitenpoliermaschine und Doppelseitenschleifmaschine
Machine de polissage double face et machine de rodage double face

(30) Priority: 04.03.1998 JP 6957998
(43) Date of publication of application: 08.09.1999
(73) Proprietor: Super Silicon Crystal Research Institute Corp., Gumma 379-0125 (JP); SUMITOMO HEAVY INDUSTRIES, LTD., Shinagawa-ku, Tokyo 141-8686 (JP)
(72) Inventor: Abe, Kohzo, Takasaki-city, Gumma 370-0816 (JP); Isobe, Sho, Yokohama-city, Kanagawa, 222-0025 (JP); Tomita, Yoshiyuki, Hiratsuka-city, Kanagawa, 254-0901 (JP); Hara, Kazutoshi, Kamakura-city, Kanagawa, 247-0051 (JP); Masaki, Ryuzo, Niihama-city, Ehime, 792-0011 (JP); Iwase, Akio, Niihama-city, Ehime, 792-0050 (JP); Nagata, Hiroshi, Niihama-city, Ehime, 792-0043 (JP)
(74) Representative: Fiener, Josef

(56) References cited:
- GB-A- 890 635
- US-A- 4 602 539
- US-A- 4 782 631
- DATABASE WPI Section PQ, Week 9346 Derwent Publications Ltd., London, GB; Class P61, AN 93-366749 XP002106109 -& SU 1 773 687 A (MOSC AUTOM PRODN LINES DES BUR), 7 November 1992

## Description

### Technical Field

The present invention relates to a double side grinding apparatus suitable for grinding both planes of a work simultaneously, or a double side polishing apparatus suitable for polishing both planes of a work simultaneously, as per the preamble of claim 1. An example of such an apparatus is disclosed in GB 870 635 A.

### Background Art

Works applied to semiconductor silicon wafers, optics, compact disks, minidisks and the like require their surfaces to be strictly flat and parallel to each other, and the requirement is increasing in strictness every year. Conventionally, a double side grinding apparatus is known to be an apparatus capable of grinding and finishing both planes of a work simultaneously with high efficiency, which requires the flatness and parallelism of both planes. The fluctuation of final accuracy of a work that is machined by using this double side grinding apparatus is usually a few µm in flatness as well as in parallelism.

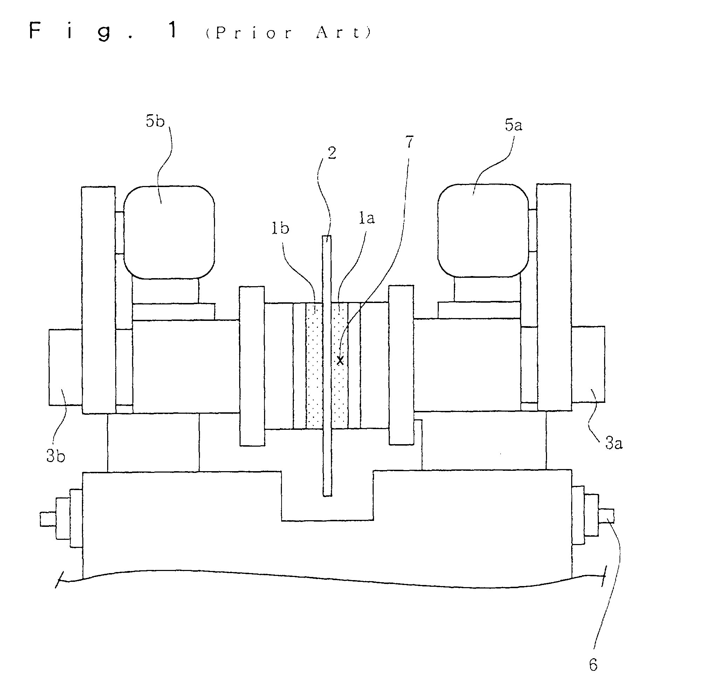

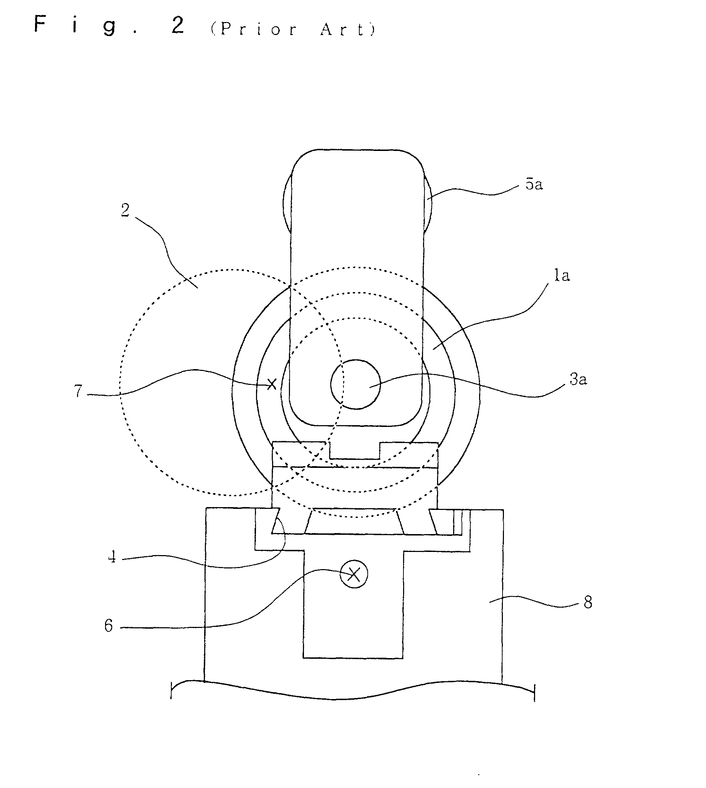

FIG. 1 shows a front elevation of one example of a conventional horizontal double side grinding apparatus, and FIG. 2 shows its profile. The double side grinding apparatus shown in FIGS. 1 and 2 (cf. GB-A-890 635) is so arranged that the open sides of two cupped-type grinding wheels 1a and 1b each having a flat grinding face at the end are set facing each other and move in a manner permitting simultaneous contact with both sides of a work 2 to grind them.

In the double side grinding apparatus shown in FIGS. 1 and 2, main spindles are given relative rotational movement by spindle motors, and the cupped-type grinding wheels 1a and 1b are fitted detachably at the ends of two opposite main spindles 3a and 3b having the same pivotal axis, and the grinding planes of the cupped-type grinding wheels 1a and 1b face each other. Each of the main spindles 3a and 3b is retained and restrained by a sliding or ball-and-roller guide 4. The guide 4 is fixed on a bed 8, and in a horizontal double side grinding apparatus, it is generally placed underneath the main spindles 3a and 3b, with two guides disposed in parallel to the pivotal axis of the main spindles 3a and 3b.

The rotating force of the main spindles 3a and 3b is transmitted by spindle motors 5 disposed above the main spindles 3a and 3b via driving belts. In addition, while FIG. 1 shows a horizontal double side grinding apparatus, a vertical double side grinding apparatus has a similar structure rearranged in the vertical direction.

The above-mentioned conventional double side grinding apparatus has ball-and-roller bearings used for rotating the main spindles. In order to ensure the rotating accuracy of such spindles, angular contact ball bearings are placed opposite to other and pressure is preloaded, or conical bearings are used for ensuring rigidity, but these means usually have limits, a tolerance of 1 µm in accuracy and 20 kgf/µm in rigidity.

Further, in the above-mentioned conventional double side grinding apparatus, sliding guideways are mostly used for the guides in consideration of damping, though, in the case of achieving minute movement at a positioning tolerance of 1 µm or less, such guides are subjected to stick slidings attributable to pitching errors in the grinding planes.

Furthermore, in the above-mentioned conventional double side grinding apparatus, as shown in FIG. 2, the distances between a working point 7 in the grinding plane of the cupped-type grinding wheels 1a and 1b and the guide way 4, and between the working point 7 and a motion center 6, are apart from each other, and the greater the diameter of the main spindles 3a and 3b, the wider these distances, so that this tendency becomes increasingly conspicuous as the size of the work enlarges. However, the wider distances become between the working point 7 and the guide way 4, and between the working point 7 and the motion center 6, the more difficult it makes to ensure sufficient rigidity, and the problem that the measuring inaccuracies caused by the Abbe's error occur.

On the other hand, recently, for example, for the glass material of optics, or semiconductor silicon wafers, while the final accuracy of machined planes has been increasing in strictness every year, the grinding apparatus is inevitably made larger by the increased work size for silicon wafers and the like. In order to ensure the accuracy of flatness to submicrons and that of surface roughness to little over 10 nm for the finished state of works by grinding with a double side apparatus, it is necessary to achieve a sufficient level of rigidity against the reaction force at the time of machining as well as a positioning tolerance of 10 to 100 nm.

It is therefore an object of the present invention to provide a double side grinding apparatus to solve or reduce the aforesaid problem, and, more in detail, to provide a double side grinding apparatus and a double side polishing apparatus capable of enhancing the accuracy, ensuring rigidity against the reaction force at the time of machining as well as reducing pitching errors.

### Disclosure of the Invention

In order to solve the aforesaid problems, the double side grinding apparatus or the double side polishing apparatus according to the present invention is an apparatus for grinding or polishing both sides of a work simultaneously whereby working planes of grinding wheels or polishing cloths fitted at the end of two opposite main spindles rotated in a spindlestock each are brought into contact with both sides of the work characterized in that at least three guide supporting mechanisms for supporting and transporting the main spindles are distributed around the spindlestock (16), and the geometric center of the guide supporting mechanisms is closely or perfectly matched with the center of the main spindles.

According to the present invention, the motion center synthesized of all the guide ways, which is closely or perfectly matched with the center of the main spindles, comes close to the working point of the double side grinding apparatus or the double side polishing apparatus. Therefore, the bending component in the force of reaction to the machining when a work is ground by the main spindles can be made smaller and the rigidity against the force of reaction to machining can be ensured more easily.

In the double side grinding apparatus or the double side polishing apparatus according to the present invention, it is necessary, in order to match the motion center composed of the guide ways with the center of the main spindles that the number of the aforesaid guide ways be not fewer than three, and in order to prevent the guide members having the guide ways from obstructing the bringing in or out of a work. three guide ways are the most preferable.

In the case of using a horizontal double side grinding apparatus or a horizontal double side polishing apparatus and three guide ways, the following combinations are preferable for the arrangement of the guide ways and their supporting mechanisms. A first combination consists of two guide ways disposed on the horizontal face under the main spindles and one disposed on the upper side of the main spindles. A second combination consists of two guide ways disposed on the horizontal face on the upper side of the main spindles and one disposed on the lower side of the main spindles. In each case. it is preferable that the three guide ways and their supporting mechanisms be arranged in a triangle or more specifically a regular triangle and the main spindle be disposed at the geometric center of gravity thereof. The double side grinding apparatus or the double side polishing apparatus according to the present invention consisting of such an arrangement is not limited to the horizontal type, and the arrangement of using a plurality of the guide ways is also applicable to the vertical version.

A plurality of the guide ways in the double side grinding apparatus or the double side polishing apparatus according to the present invention may be formed of at least one integrally composed guide member with bed, column or etc.

The guideway mechanisms of a plurality of the guide ways arranged in the double side grinding apparatus or the double side polishing apparatus according to the present invention may include different types of guideway mechanisms. Specifically, when applied to a horizontal double side grinding apparatus or a horizontal double side polishing apparatus, the guideway mechanism of the guide ways disposed on the upper side of the main spindles should desirably be a hydrostatic guideway mechanism, or the types of the guide ways disposed on the upper and under side of the main spindles can be a combination of the hydrostatic guideway mechanism and a sliding guideway mechanism.

### Brief Description of the Drawings

FIG. 1 shows a front elevation of one example of a conventional horizontal double side grinding apparatus.

FIG. 2 shows a profile of one example of the conventional horizontal double side grinding apparatus.

FIG. 3 shows a perspective view of one embodiment of a double side grinding apparatus according to the present invention.

FIG. 4 shows a profile of the embodiment of the double side grinding apparatus according to the present invention.

FIG. 5 shows another embodiment of a double side grinding apparatus according to the present invention.

### Description of Symbols

1a, 1b: cupped-type grinding wheels; 2: work; 3a, 3b: main spindles; 4: guide: 5a, 5b: spindle motor; 6: motion center; 7: working point; 8: bed: 11a, 11b: cupped-type grinding wheels;
12: work; 13: main spindles; 14a, 14b, 14c, 14d: guide ways;
15: saddle: 16: spindle stock; 17: bed; 18: guide way member

### Detailed Description of the Preferred Embodiments

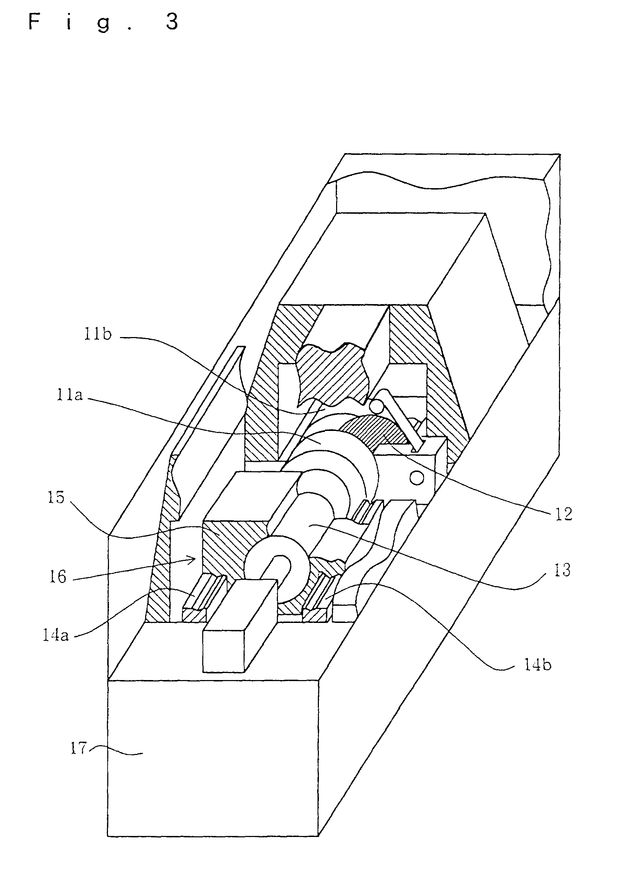

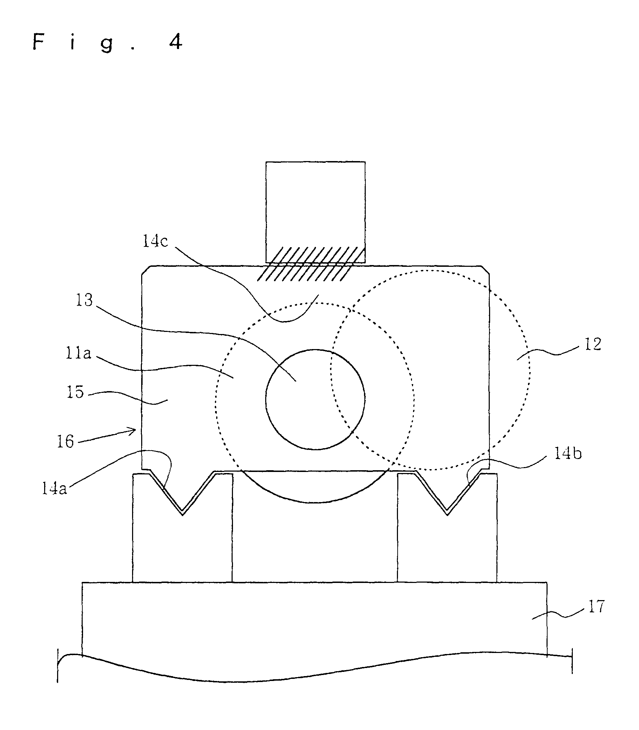

One embodiment of a double side grinding apparatus according to the present invention is shown in FIG. 3 in a perspective view and in FIG. 4 in a profile. In the double side grinding apparatus shown in FIGS. 3 and 4, two main spindles 13 are disposed opposite to each other so that two of the open sides of cupped-type grinding wheels 11a and 11b having a flat grinding face at one end of each main spindle 13 are set facing each other and move in a manner permitting simultaneous contact with both sides of a work 12 to grind them. The main spindles 13 are integrally fixed by a saddle 15 to form a spindle stock 16.

Two slidable guide ways 14a and 14b are fixed to a bed 17 to be disposed on the same horizontal plane and to fit the under face of the spindle stock 16, and each guideways mechanism of the guide ways 14a and 14b is a V-shaped sliding guideway mechanism. The upper face of the spindle stock 16 is formed so as to fit a guide way 14c, the upper guide way, and FIG. 4 shows a guide way 14c of a hydrostatic guideway mechanism. These two slidable guide ways 14a and 14b and the guide way 14c are arranged in a triangle or more specifically a regular triangle and the main spindle is disposed at the geometric center of gravity thereof.

As the lower guide ways 14a and 14b are a sliding guideway mechanism, damping can be ensured. In addition, as the upper guide way 14c is a hydrostatic guideway mechanism, the pitching errors attributable to the lower guide ways 14a and 14b can be minimized. Since the pitching errors can be reduced in such a manner, the motion center composed of the entire guide ways is set to be positioned at the center of the main spindle. For the driving source in the direction of the cut into the main spindle 13, a cylinder or a linear motor can be used.

While three guide ways are provided, two disposed under the spindle stock and one disposed in contact with the upper face of the spindle stock, in the embodiment shown in FIGS. 3 and 4, two upper guide ways of a hydrostatic guideway mechanism and one lower guide way of a sliding guideway mechanism may be disposed as well.

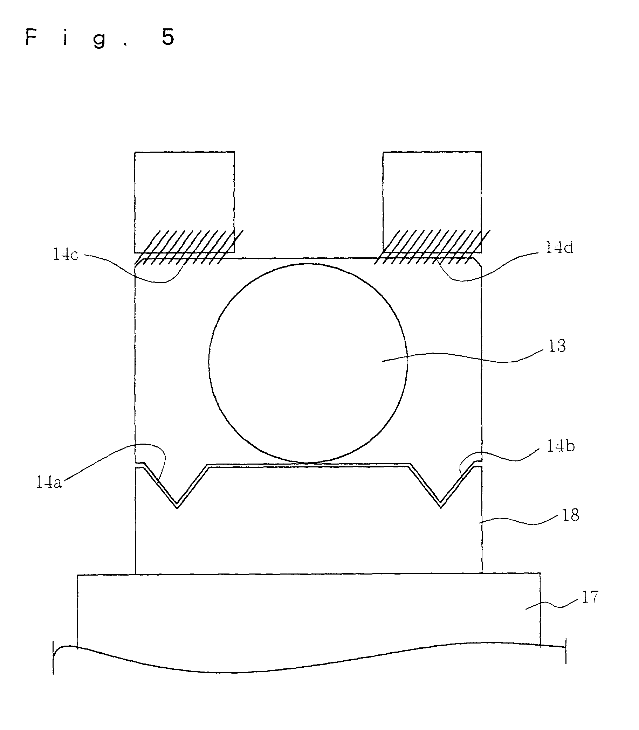

Another embodiment of the present invention is shown in FIG. 5. As shown in FIG. 5, one guide way member 18 having a plurality of guide ways may be used, and two guide ways 14c and 14d of a hydrostatic guideway mechanism may be disposed on the upper side.

Although the number of the guide ways should preferably be three in order to prevent them from obstructing the bringing in of out of a work, the total number of the guide way member 18 may be four or more if this problem is overcome.

A hydrostatic bearing can be used for the rotating mechanism of the main spindles in the double side grinding apparatus according to the present invention. In this case, oil or water can be applied as the hydrostatic medium, and it can ensure the accuracy and rigidity that cannot be obtained with a ball-and-roller bearing. For example, the ball-and-roller bearing has a tolerance of about 1 µm, but the hydrostatic bearing can narrow the tolerance to 0.01 to 0.1 µm.

Although the above-stated mode of implementation describes a double side grinding apparatus, if the working member mounted at the end of the main spindle is replaced with a member for polishing, it can be used for a double side polishing apparatus as well.

### Industrial Applicability

The motion center composed of a plurality of guideways, preferably three, for supporting and shifting the main spindles in a double side grinding apparatus or a double side polishing apparatus is closely or perfectly matched with the center position of the main spindle so that the bending component in the force of reaction to the machining when a work is ground by the main spindles can be made smaller and the rigidity against the force of reaction to machining can be ensured more easily.

Where hydrostatic bearings are used for the main spindles, the range of fluctuation can be narrowed from the order of microns to that of submicrons, and adequate rigidity can also be ensured.

Where a plurality of guide ways of a sliding guideway mechanism and of hydrostatic guideway mechanisms are disposed and used in combination, the pitching errors can be reduced.

Where the aforesaid requirements are provided, a double side grinding apparatus or a double side polishing apparatus according to the present invention can ensure a sufficient level rigidity against the force of reaction to machining as well as achieve a tolerance of positioning accuracy in a range of 10 to 100 nm.

## Claims

1. A double side grinding/polishing apparatus for grinding or polishing both sides of a work (12) simultaneously whereby working planes of grinding wheels (11a, 11b) or polishing cloth fitted at the ends of two opposite main spindles (13) rotated in a spindlestock (16) each, are brought into contact with both sides of the work (12), **characterized in that** at least three guide supporting mechanisms (14a, 14b, 14c) for supporting and shifting the main spindles (13) are distributed around the spindlestock (16) and the geometric center of the guide supporting mechanisms (14a, 14b, 14c) is closely or perfectly matched with the center of said main spindles (13).

2. A double side grinding/polishing apparatus, as claimed in claim 1, wherein the number of said guide supporting mechanisms (14a, 14b, 14c) is three.

3. A double side grinding/polishing apparatus, as claimed in Claim 2, wherein two parallel guide supporting mechanisms (14a, 14b) are disposed on the horizontal face under said main spindle (13) and one guide supporting mechanism (14c) is disposed above the main spindle (13) in parallel to said lower guide supporting mechanisms (14a, 14b).

4. A double side grinding/polishing apparatus, as claimed in Claim 2, wherein one guide supporting mechanism (14a or 14b) is disposed on the horizontal face under said main spindle (13) and two parallel guide supporting mechanisms (f.i.14c) are disposed above the main spindle (13) in parallel to said lower guide supporting mechanism (14a or 14b).

5. A double side grinding/polishing apparatus, as claimed in Claim 1, wherein the number of said guide supporting mechanisms (14a, 14b, 14c, 14d) is four.

6. A double side grinding/polishing apparatus, as claimed in Claim 1, wherein, out of a plurality of said guide supporting mechanisms, the guide supporting mechanism (f.i. 14c) disposed above the main spindle (13) is a hydrostatic guideway and the guide supporting mechanism (f.i. 14a) disposed under the main spindle (13) is a sliding guideway.

## Patentansprüche

1. Doppelseitenschleif-/-poliermaschine zum gleichzeitigen Schleifen oder Polieren beider Seiten eines Werkstücks (12), wodurch Arbeitsflächen von Schleifscheiben (11a, 11b) oder Poliertuch, die an den Enden zweier gegenüberliegender Hauptspindeln (13) angebracht sind, die jeweils in einem Spindelstock (16) rotierend angetrieben werden, mit beiden Seiten des Werkstücks (12) in Kontakt gebracht werden,
**dadurch gekennzeichnet, dass**
wenigstens drei Führungslagermechanismen (14a, 14b, 14c) zum Lagern und Verschieben der Hauptspindeln (13) um den Spindelstock (16) verteilt sind und der geometrische Mittelpunkt der Führungslagermechanismen (14a, 14b, 14c) eng oder vollkommen an die Achse der Hauptspindeln (13) angepasst ist.

2. Doppelseitenschleif-/-poliermaschine nach Anspruch 1, wobei die Anzahl der Führungslagermechanismen (14a, 14b, 14c) drei beträgt.

3. Doppelseitenschleif-/-poliermaschine nach Anspruch 2, wobei zwei parallele Führungslagermechanismen (14a, 14b) auf der horizontalen Fläche unter der Hauptspindel (13) angeordnet sind und ein Führungslagermechanismus (14c) über der Hauptspindel (13) parallel zu den unteren Führungslagermechanismen (14a, 14b) angeordnet ist.

4. Doppelseitenschleif-/-poliermaschine nach Anspruch 2, wobei ein Führungslagermechanismus (14a oder 14b) auf der horizontalen Fläche unter der Hauptspindel (13) angeordnet ist und zwei parallele Führungslagermechanismen (z. B. 14c) über der Hauptspindel (13) parallel zu dem unteren Führungslagermechanismus (14a oder 14b) angeordnet sind.

5. Doppelseitenschleif-/-poliermaschine nach Anspruch 1, wobei die Anzahl der Führungslagermechanismen (14a, 14b, 14c, 14d) vier beträgt.

6. Doppelseitenschleif-/-poliermaschine nach Anspruch 1, wobei aus einer Vielzahl der Führungslagermechanismen der über der Hauptspindel (13) angeordnete Führungslagermechanismus (z. B. 14c) eine hydrostatische Führungsbahn ist und der unter der Hauptspindel (13) angeordnete Führungslagermechanismus (z. B. 14a) eine Gleitbettführung ist.

## Revendications

1. Appareil de rectification/polissage à double face destiné à rectifier ou polir les deux côtés d'une pièce (12) simultanément de sorte que les plans de travail des meules de rectification (11a, 11b) ou de la toile de polissage montées aux extrémités de deux broches principales opposées (13) sont entraînés en rotation dans un bloc de broche (16) sont amenés en contact avec les deux côtés de la pièce (12), **caractérisé en ce qu'**au moins trois mécanismes de support de guidage (14a, 14b, 14c) destinés à supporter et déplacer les broches principales (13) sont répartis autour du bloc de broche (16) et le centre géométrique des mécanismes de support de guidage (14a, 14b, 14c) correspond de près ou parfaitement avec le centre desdites broches principales (13).

2. Appareil de rectification/polissage à double face selon la revendication 1, dans lequel le nombre desdits mécanismes de support de guidage (14a, 14b, 14c) est de trois.

3. Appareil de rectification/polissage à double face selon la revendication 2, dans lequel deux mécanismes de support de guidage parallèles (14a, 14b) sont disposés sur la face horizontale sous ladite broche principale (13) et un mécanisme de support de guidage (14c) est disposé au-dessus de la broche principale (13) parallèlement aux dits mécanismes de support de guidage inférieurs (14a, 14b).

4. Appareil de rectification/polissage à double face selon la revendication 2, dans lequel un mécanisme de support de guidage (14a ou 14b) est disposé sur la face horizontale sous ladite broche principale (13) et deux mécanismes de support de guide parallèles (par exemple 14c) sont disposés au-dessus de la broche principale (13) parallèlement au dit mécanisme de support de guidage inférieur (14a ou 14b).

5. Appareil de rectification/polissage à double face selon la revendication 1, dans lequel le nombre desdits mécanismes de support de guidage (14a, 14b, 14c, 14d) est de quatre.

6. Appareil de rectification/polissage à double face selon la revendication 1, dans lequel, parmi une multiplicité desdits mécanismes de support de guidage, le mécanisme de support de guidage (par exemple 14c) disposé au-dessus de la broche principale (13) est un guide hydrostatique et le mécanisme de support de guidage (par exemple 14a) disposé sous la broche principale (13) est un guide coulissant.
